(19) Europäisches Patentamt
European Patent Office
Office européen des brevets

(11) **EP 4 693 824 A1**

(12) **EUROPEAN PATENT APPLICATION**
published in accordance with Art. 153(4) EPC

(43) Date of publication:
**11.02.2026 Bulletin 2026/07**

(21) Application number: **24780665.6**

(22) Date of filing: **28.03.2024**

(51) International Patent Classification (IPC):
*H02J 50/20* *(2016.01)*

(52) Cooperative Patent Classification (CPC):
**H02J 50/20**

(86) International application number:
**PCT/JP2024/012703**

(87) International publication number:
**WO 2024/204565 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023056342**

(71) Applicant: MITSUI CHEMICALS, INC.
**Tokyo 104-0028 (JP)**

(72) Inventors:
• ITO, Tomoaki
**Sodegaura-shi, Chiba 299-0265 (JP)**
• ASAMI, Takuo
**Sodegaura-shi, Chiba 299-0265 (JP)**
• SUGIYAMA, Kazuto
**Sodegaura-shi, Chiba 299-0265 (JP)**
• FUKUYAMA, Naoki
**Sodegaura-shi, Chiba 299-0265 (JP)**

(74) Representative: Hoffmann Eitle
**Patent- und Rechtsanwälte PartmbB
Arabellastraße 30
81925 München (DE)**

(54) **NON-CONTACT POWER SUPPLY COMPONENT, NON-CONTACT POWER SUPPLY SYSTEM, IMMOBILE BODY, MOBILE BODY, AND ELECTRIC PRODUCT**

(57) Provided is a non-contact power supply component having a small relative permittivity and dielectric loss tangent, which is suitable for use in non-contact power supply. An embodiment of the present invention relates to a non-contact power supply component, a non-contact power supply system, an immobile body, a mobile body, or an electric product, and the non-contact power supply component contains a 4-methyl-1-pentene (co)polymer (A).

EP 4 693 824 A1

**Description**

[Technical Field]

An embodiment of the present invention relates to a non-contact power supply component, a non-contact power supply system, an immobile body, a mobile body, or an electric product.

[Background Art]

Conventionally, there has been known a non-contact power supply (also referred to as wireless power supply or contactless power supply) in which electric power is transmitted in a non-contact manner between an immobile device provided on an immobile body, such as the ground, and a mobile body, such as a vehicle, by using a transmission method such as electric field coupling, magnetic field coupling (including electromagnetic induction and magnetic field resonance), and an electromagnetic wave (including microwave and laser) method.

Regarding such non-contact power supply, for example, Patent Literature 1 discloses a wireless power supply floor structure that wirelessly supplies electric power to a vehicle that travels electrically, and describes that an insulating layer or a protective layer containing a material such as polyolefin is used as an insulating layer or a protective layer of the wireless power supply floor structure.

[Citation List]

[Patent Literature]

[Patent Literature 1]
JP 2022-60100A

[Summary of Invention]

In the non-contact power supply, it is required to reduce transmission loss such as dielectric loss to ensure power supply efficiency, but conventional non-contact power supply components have room for improvement in terms of reduction of this transmission loss.

An embodiment of the present invention provides a non-contact power supply component having a small relative permittivity and dielectric loss tangent, which is suitable for use in non-contact power supply.

[Solution to Problem]

Configuration examples of the present invention are as follows.

In the present specification, the term "to" which indicates a numerical range, in, for example, "M to N", means being "M or more and N or less".

[1] A non-contact power supply component, comprising a 4-methyl-1-pentene (co)polymer (A).

[2] The non-contact power supply component according to [1], further comprising a thermoplastic resin (B) other than the (co)polymer (A).

[3] The non-contact power supply component according to [2], wherein the thermoplastic resin (B) comprises an olefin polymer (B-1).

[4] The non-contact power supply component according to [3], wherein the thermoplastic resin (B) contains 0 to 50% by mass of a thermoplastic resin (B-2) other than the olefin polymer (B-1) (i.e., the non-contact power supply component according to [3], wherein the thermoplastic resin (B) is free of a thermoplastic resin (B-2) other than the olefin polymer (B-1), or the thermoplastic resin (B) contains a thermoplastic resin (B-2) other than the olefin polymer (B-1) in an amount of more than 0% by mass and 50% by mass or less).

[5] The non-contact power supply component according to [4], wherein the thermoplastic resin (B-2) is an aliphatic polyamide.

[6] The non-contact power supply component according to any one of [1] to [5], further comprising at least one additive selected from a filler, a weathering stabilizer, an antioxidant, and a flame retardant.

[7] The non-contact power supply component according to any one of [1] to [6], wherein the (co)polymer (A) has a density of 0.85 g/cm$^3$ or less.

[8] The non-contact power supply component according to any one of [1] to [7], which has a dielectric loss tangent of 0.0025 or less at a frequency band of 1 MHz to 24 GHz.

[9] The non-contact power supply component according to any one of [1] to [8], which has a relative permittivity of less than 2.5 at a frequency band of 1 MHz to 24 GHz.

[10] The non-contact power supply component according to any one of [1] to [9], which is an electrode member for non-contact power supply based on electric field coupling.

[11] The non-contact power supply component according to any one of [1] to [9], which is a case for non-contact power supply based on magnetic field coupling.

[12] The non-contact power supply component according to any one of [1] to [9], which is a protective member for non-contact power supply.

[13] A non-contact power supply system using the non-contact power supply component according to any one of [1] to [12].

[14] An immobile body comprising the non-contact power supply component according to any one of [1] to [12].

[15] A mobile body comprising the non-contact power supply component according to any one of [1] to [12].

[16] An electric product comprising the non-contact power supply component according to any one of [1] to [12].

[Advantageous Effects of Invention]

According to an embodiment of the present invention, it is possible to provide a non-contact power supply component having a small relative permittivity and dielectric loss tangent, which is suitable for use in non-contact power supply.

According to an embodiment of the present invention, it is also possible to provide a non-contact power supply component that achieves the desired effect even if it is thin and lightweight and a non-contact power supply component having little transmission loss such as dielectric loss.

[Description of Embodiments]

<<Non-contact power supply component>>

A non-contact power supply component according to an embodiment of the present invention (hereinafter also referred to as the "present component") contains a 4-methyl-1-pentene (co)polymer (A). The present component may also be regarded as a component for a non-contact power supply.

Since such a present component can have a low relative permittivity and a low dielectric loss tangent, the use of the present component can reduce the transmission loss of the non-contact power supply system, whereby a non-contact power supply system with excellent power supply efficiency can be easily obtained.

In addition, since the present component can have a low relative permittivity and a low dielectric loss tangent, for example, when the present component is used as an insulating layer, the component can exhibit a required insulation property even if the thickness and the weight are reduced. Therefore, when the present component is used for a mobile body of a non-contact power supply system, a lightweight mobile body can be easily obtained, and when the present component is used for an immobile body of a non-contact power supply system, the formability of the immobile body is excellent, and an immobile body with less unevenness such as a step that may hinder the movement of a mobile body such as a vehicle can be easily obtained.

As described above, the present component can achieve the desired effect required for a non-contact power supply component even if the thickness and the weight are reduced and thus can contribute to a reduction in environmental load by reducing the amount of the polymer (A) or the other materials used.

The present component is excellent in heat resistance and thus provides excellent resistance (heat resistance) to heat which may be generated during formation of a non-contact power supply system or during power supply/reception using the present component. The present component is also excellent in antifouling property, thus reducing transmission loss due to dirt. In particular, non-contact power supply components used (e.g., buried), for example, on outdoor ground (road surface), are required to have heat resistance. The present component can also be suitably used on such an outdoor ground (road surface) because of its excellent heat resistance.

Furthermore, when used for an immobile body such as an underground of a non-contact power supply system, the present component may come into contact with an alkaline substance such as asphalt or concrete. However, since the present component is excellent in chemical resistance, particularly alkali resistance, even when used for such an application, the present component can exhibit desired physical properties over an extended period.

The dielectric loss tangent of the present component at a frequency band of 1 MHz to 24 GHz is preferably 0.0025 or less, more preferably 0.0020 or less, still more preferably 0.0010 or less, and particularly preferably 0.00050 or less. The lower limit of the dielectric loss tangent is preferably as small as possible, but is, for example, 0.000001.

The use of the present component having a dielectric loss tangent within the above-described range can reduce the transmission loss of a non-contact power supply system, whereby a non-contact power supply system with excellent power supply efficiency can be easily obtained.

Specifically, the dielectric loss tangent can be measured using a method described in Examples below.

The relative permittivity of the present component at a frequency band of 1 MHz to 24 GHz is preferably less than 2.5, more preferably 2.4 or less, still more preferably 2.3 or less, and particularly preferably 2.2 or less. The lower limit of the relative permittivity is preferably as small as possible, but is, for example, 1.1, preferably 1.5.

The use of the present component having a relative permittivity within the above-described range can reduce the transmission loss of a non-contact power supply system, whereby a non-contact power supply system with excellent power supply efficiency can be easily obtained.

Specifically, the relative permittivity can be measured using a method described in Examples below.

When used in an electric field coupling, magnetic field coupling (including electromagnetic induction and magnetic field resonance), or electromagnetic (including microwave and laser) method of a non-contact power supply system, the present component preferably has preferably the above-described range of the dielectric loss tangent and relative permittivity preferably at a frequency band of 1 MHz to 24 GHz, more preferably 1.5 MHz to 23.5 GHz.

The density of the present component, depending on the application of the present component, is preferably 0.85 $g/cm^3$ or less, more preferably 0.84 $g/cm^3$ or less, and still more preferably 0.83 $g/cm^3$ or less, and the lower limit is preferably 0.05 $g/cm^3$, more preferably 0.10 $g/cm^3$, and still more preferably 0.50 $g/cm^3$.

When the density is in the above-described range, the present component having improved mechanical strength, reduced weight, and excellent mechanical strength while maintaining a low relative permittivity and a low dielectric loss tangent can be easily obtained.

Specifically, the density can be measured using a method described in Examples.

The present component has a melting point (Tm) measured with a differential scanning calorimeter (DSC) of preferably 200 to 260°C, more preferably 210 to 250°C, and still more preferably 220 to 240°C.

When the Tm is in the above-described range, the present component excellent in heat resistance can be easily obtained.

Specifically, the Tm can be measured using a method described in Examples below.

The flexural modulus of the present component as measured in accordance with ASTM D790 is preferably 150 MPa or more, more preferably 400 MPa or more, and still more preferably 500 MPa or more, and the upper limit is not particularly limited, but is, for example, 7000 MPa.

When the flexural modulus is in the above-described range, the present component excellent in flexural properties can be easily obtained.

Specifically, the flexural modulus can be measured using a method described in Examples below.

<4-Methyl-1-pentene (co)polymer (A) (4-Methyl-1-pentene-based (co)polymer (A))>

The 4-methyl-1-pentene (co)polymer (A) (hereinafter, also simply referred to as a "polymer (A)") is not particularly limited as long as it is a polymer containing a structural unit derived from 4-methyl-1-pentene, and may be a homopolymer of 4-methyl-1-pentene or a copolymer of 4-methyl-1-pentene and another monomer or the others monomers (e.g., $\alpha$-olefin).

Since the polymer (A) has excellent heat resistance, the present component containing the polymer (A) is suitable for use in applications requiring heat resistance (e.g., outdoor ground (road surface)). Although the molding method is limited because a fluororesin (e.g., PTFE) exhibiting a low relative permittivity has poor melt flowability, but the present component having a desired shape can be easily obtained by using the polymer (A) because the polymer (A) has melt flowability and excellent molding processability.

The polymer (A) used in the present component may be of one type or two or more types.

The content of the structural unit derived from 4-methyl-1-pentene in the polymer (A) is preferably 80 to 100% by mass, and more preferably 85 to 100% by mass.

The content of the structural unit derived from the other monomer is preferably 0 to 20% by mass, and more preferably 0 to 15% by mass. The polymer (A) may contain one or more structural units derived from the other monomer.

When the polymer (A) in which the content of each structural unit is in the above-described range is used, the present component excellent in formability, heat resistance, chemical resistance, and dielectric properties can be easily obtained.

Note that the content of each structural unit is a content when the total of the structural unit derived from 4-methyl-1-pentene and the structural unit derived from the other monomer is 100% by mass.

The other monomer is preferably an $\alpha$-olefin having 2 to 20 carbon atoms (excluding 4-methyl-1-pentene).

The $\alpha$-olefin may be used alone or two or more thereof.

Preferred examples of the $\alpha$-olefin include ethylene, propylene, 1-butene, 1-pentene, 1-hexene, 3-methyl-1-butene, 3-methyl-1-pentene, 1-octene, 1-decene, 1-dodecene, 1-tetradecene, 1-hexadecene, 1-heptadecene, 1-octadecene, and 1-eicosene.

Among them, the α-olefin is preferably ethylene, propylene, 1-butene, 1-hexene, 3-methyl-1-butene, 3-methyl-1-pentene, 1-octene, 1-decene, 1-hexadecene, 1-heptadecene, or 1-octadecene, and more preferably ethylene, propylene, 1-butene, 1-hexene, 1-octene, 1-decene, 1-hexadecene, 1-heptadecene, or 1-octadecene from the viewpoint of copolymerizability and physical properties of the resulting copolymer.

Examples of the other monomer other than the α-olefin include vinyl compounds having a cyclic structure such as styrene, vinylcyclopentene, vinylcyclohexane and vinylnorbornane; vinyl esters such as vinyl acetate; unsaturated organic acids or derivatives thereof such as maleic anhydride; conjugated dienes such as butadiene, isoprene, pentadiene and 2,3-dimethylbutadiene; and nonconjugated polyenes such as 1,4-hexadiene, 1,6-octadiene, 2-methyl-1,5-hexadiene, 6-methyl-1,5-heptadiene, 7-methyl-1,6-octadiene, dicyclopentadiene, cyclohexadiene, dicyclooctadiene, methylenenorbornene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene and 2-propenyl-2,2-norbornadiene.

The other monomer may be used alone or two or more thereof.

The density of the polymer (A) as measured in accordance with ASTM D1505 is preferably 0.85 g/cm$^3$ or less, more preferably 0.84 g/cm$^3$ or less, and the lower limit is preferably 0.82 g/cm$^3$, more preferably 0.83 g/cm$^3$.

When the density is in the above-described range, the present component having improved mechanical strength, reduced weight, and excellent mechanical strength while maintaining a low relative permittivity and a low dielectric loss tangent can be easily obtained.

The intrinsic viscosity [η] of the polymer (A) as measured in decalin at 135°C is preferably 1.5 to 5.0 dL/g, more preferably 1.6 to 3.5 dL/g, and still more preferably 1.7 to 3.2 dL/g.

When the polymer (A) having [η] in the above-described range is used, the polymer (A) has good flowability, excellent formability, especially film formability, and the present component having excellent heat resistance can be easily obtained.

In the present specification, the intrinsic viscosity of the polymer can be measured as follows.

About 20 mg of the polymer is dissolved in 15 mL of decalin to measure a specific viscosity η$_{sp}$ in an oil bath at 135°C, and this decalin solution is then diluted with additional 5 mL of decalin solvent to measure a specific viscosity η$_{sp}$ in the same manner. This dilution operation is further repeated twice, and as shown in Equation (1) below, a value of η$_{sp}$/C when the concentration (C) is extrapolated to 0 was taken as the intrinsic viscosity [η] (unit: dL/g).

$$[\eta] = \lim (\eta_{sp}/C) \quad (C \to 0) \qquad (1)$$

The polymer (A) has a melting point (Tm) measured with a DSC of preferably 200 to 260°C, more preferably 210 to 250°C, and still more preferably 220 to 245°C.

When the polymer (A) having a melting point in the above-described range is used, the present component excellent in heat resistance and mechanical properties can be easily obtained.

The Tm can be controlled by adjusting the stereoregularity of the polymer (A) and the amount of the other monomer.

In the present specification, the Tm can be measured as follows.

Using a DSC measurement apparatus (DSC220C) manufactured by Seiko Instruments Inc., about 5 mg of the polymer (A) is packed in an aluminum pan for measurement, raised from room temperature to 280°C at 10°C/min, held at 280°C for 5 min, and then decreased to -50°C at 10°C/min. Subsequently, the melting point is calculated from the peak apex of the crystal melting peak when the temperature is raised to 280°C at 10°C/min. When the polymer (A) has a plurality of peaks, the apex of the peak located on the highest temperature side is defined as the melting point.

The polymer (A) can be synthesized by (co)polymerizing 4-methyl-1-pentene and, if necessary, the other monomer using a conventionally known catalyst for olefin polymerization, for example, a vanadium-based catalyst, a titanium-based catalyst, a magnesium-supported titanium catalyst, or a metallocene catalyst described in, for example, WO01/53369, WO01/27124, WO06/025540, JPH03-193796A, or JPH02-41303A.

The polymer (A) may use only biomass-derived raw materials, only fossil fuel-derived raw materials, or both biomass-derived raw materials and fossil fuel-derived raw materials as its raw materials (e.g., 4-methyl-1-pentene and the other monomer).

It is preferable that the polymer (A) contain a structural unit derived from a biomass-derived raw material, from the viewpoint of reducing environmental load (mainly reducing greenhouse gas).

As used herein, the biomass-derived raw material refers to raw materials produced by using, for example, plantderived or animal-derived every (renewable) natural raw materials and their residues as raw materials, including fungi, yeast, algae, and bacteria, and examples thereof include a raw material containing $^{14}$C isotopes as the carbon in a proportion of about $1 \times 10^{-12}$ and having a biomass carbon concentration (unit: pMC) of around 100 pMC as measured in accordance with ASTM D6866. The biomass-derived raw material (e.g., 4-methyl-1-pentene and the other monomer) can be obtained using, for example, a conventionally known method.

For a given (co)polymer, under the same conditions of (co)polymer production, such as a polymerization catalyst, polymerization process, and a polymerization temperature, even though the (co)polymer is a (co)polymer using a biomass-derived raw material, the molecular structure other than containing a $^{14}C$ isotope at a proportion of approximately $1 \times 10^{-12}$ to $10^{-14}$, is the same as that of a (co)monomer composed of a fossil-derived raw material. Therefore, performance of a (co)polymer including a biomass-derived raw material and that of a (co)polymer composed of a fossil fuel-derived raw material are considered to be the same.

As the polymer (A), a commercially available product may be used, and examples of the commercially available product include TPX (registered trademark) manufactured by Mitsui Chemicals, Inc.

The content of the polymer (A) in the present component is preferably 30% by mass or more, more preferably 50% by mass or more, and still more preferably 70% by mass or more per 100% by mass of the present component. The present component may consist of the polymer (A), that is, the content of the polymer (A) in the present component may be 100% by mass per 100% by mass of the present component.

When the polymer (A) is in the above-described range, it is possible to easily obtain the present component in which physical properties of the polymer (A) such as heat resistance, chemical resistance, and dielectric properties are sufficiently exhibited.

<Other Ingredient >

The present component may contain other ingredients other than the polymer (A) depending on the use thereof as long as the effects of the present invention are not impaired.

When the present component contains such other ingredients, the other ingredients may be used together with the polymer (A) in forming the present component, or a resin composition may be prepared in advance using the polymer (A) and the other ingredients, and then the present component may be formed using the resin composition.

Each of these other components may be used alone or two or more thereof.

As the other ingredients, conventionally known ingredients can be used, and specific examples thereof include at least one additive selected from a filler, a weathering stabilizer, an antioxidant, a flame retardant, a heat stabilizer, a compatibilizer, a nucleating agent, an anti-blocking agent, a pigment, a dye, a lubricant, a plasticizer, a mold release agent, an ultraviolet absorber, an antibacterial agent, a surfactant, an antistatic agent, an anti-slip agent, a foaming agent, a crystallization aid, an anti-fogging agent, an anti-aging agent, a hydrochloric acid absorber, an impact modifier, a crosslinking agent, a cocrosslinking agent, a crosslinking aid, an adhesive, a softening agent, a processing aid, and a dispersant; and a thermoplastic resin (B) other than the polymer (A) and the additive.

An embodiment of the present invention preferably includes at least one additive selected from a filler, a weathering stabilizer, an antioxidants, and a flame retardant, among these other ingredients.

[Thermoplastic Resin (B)]

The present component may contain a thermoplastic resin (B) (hereinafter, also simply referred to as a "resin (B)") other than the polymer (A) and the additive, depending on the use thereof, from the viewpoint of improving the toughness of the present component, for example. An embodiment of the present component preferably contains the resin (B).

The resin (B) may be a so-called elastomer.

When the resin (B) is used in the present component, the resin (B) may be used alone or two or more thereof.

The resin (B) may use only biomass-derived raw materials, only fossil fuel-derived raw materials, or both biomass-derived raw materials and fossil fuel-derived raw materials as its raw materials.

It is preferable that the resin (B) contain a structural unit derived from a biomass-derived raw material, from the viewpoint of reducing environmental load (mainly reducing greenhouse gas).

When the resin (B) is used in the present component, the content of the resin (B) in the present component is preferably 0.1 to 70% by mass, more preferably 0.5 to 50% by mass, and still more preferably 1 to 30% by mass per 100% by mass of the present component.

When the content of the resin (B) is in the above-described range, the present component having a desired shape suitable for the application can be easily formed, and it is possible to easily obtain the present component in which physical properties of the polymer (A) such as heat resistance, chemical resistance, and dielectric properties are sufficiently exhibited.

Specifically, the resin (B) can be classified into an olefin polymer (B-1) (olefin-based polymer (B-1)) other than the polymer (A) and a thermoplastic resin (B-2) other than the polymers (A) and (B-1).

The polymer (B-1) refers to a polymer composed of carbon and hydrogen as constituent elements using an olefin as a raw material.

Specific examples of the polymer (B-1) include low-density, medium-density, or high-density polyethylene, highpressure low-density polyethylene, isotactic polypropylene, syndiotactic polypropylene, poly-1-butene, poly-3-methyl-1-butene, ethylene/$\alpha$-olefin copolymer, propylene/$\alpha$-olefin copolymer, 1-butene/$\alpha$-olefin copolymer, cyclic olefin copolymer, ethylene/$\alpha$-olefin/diene copolymer, propylene/$\alpha$-olefin/diene copolymer, and 1-butene/$\alpha$-olefin/diene copolymer.

The content of the polymer (B-1) is preferably 0% by mass or more and less than 70% by mass, more preferably 0% by mass or more and less than 50% by mass, and still more preferably 0% by mass or more and less than 30% by mass per 100% by mass of the present component.

When the content of the polymer (B-1) is in the above-described range, the compatibility with the polymer (A) is excellent, and therefore, there is a tendency that the present component which is uniform and excellent in mechanical properties can be easily obtained.

Specific examples of the resin (B-2) include thermoplastic polyamide resins such as aliphatic polyamide (e.g., nylon 6, nylon 11, nylon 12, nylon 66, nylon 610, and nylon 612); thermoplastic polyester resins such as polyethylene terephthalate, polybutylene terephthalate, and polyester elastomer; thermoplastic vinyl aromatic resins such as polystyrene, ABS resin, AS resin, and styrene elastomer (e.g., styrene-butadiene-styrene block copolymer, styreneisoprene-styrene block copolymer, styrene-isobutylene-styrene block copolymer, and hydrogenated products thereof); thermoplastic polyurethane; vinyl chloride resin; vinylidene chloride resin; acrylic resin; ethylene-vinyl acetate copolymer; ethylene-(meth)acrylic acid copolymer; ethylene-(meth)acrylate copolymer; ionomer; ethylene-vinyl alcohol copolymer; polyvinyl alcohol; fluororesin; polycarbonate; polyacetal; polyphenylene oxide; polyphenylene sulfide; polyimide; polyarylate; polysulfone; polyethersulfone; rosinbased resin; terpene-based resin; petroleum resin; chlorinated polyolefin; and thermoplastic elastomers such as polybutadiene rubber, polyisoprene rubber, neoprene rubber, nitrile rubber, butyl rubber, halogenated butyl rubber, polyisobutylene rubber, natural rubber, and silicone rubber.

In particular, the resin (B-2) includes an aliphatic polyamide.

The content of the resin (B-2) is preferably 0 to 50% by mass, more preferably 0 to 10% by mass, still more preferably 0 to 5% by mass, particularly preferably 0 to 1% by mass, and most preferably 0% by mass per 100% by mass of the resin (B), that is, 100% by mass of the total of the polymer (B-1) and the resin (B-2). In other words, it is most preferable that the resin (B) (and the present component) be free of the resin (B-2).

When the content of the resin (B-2) is in the above-described range, the amount of ingredients having low compatibility with the polymer (A) in the present component tends to be reduced, and therefore, there is a tendency that the present component which is uniform and excellent in mechanical properties can be easily obtained.

[Filler]

Depending on its intended application, the present component may contain a filler from the standpoint of improving mechanical strength, increasing rigidity, enhancing heat resistance, and reducing the difference in the coefficient of linear expansion between the present component and other components in contact therewith (e.g., metal). An embodiment of the present component preferably includes a filler.

When a filler is used in the present component, the filler may be used alone or two or more thereof.

The filler may be an inorganic filler or an organic filler, preferably an inorganic filler.

The inorganic filler is preferably a filler having a high aspect ratio and a small dielectric loss. When the aspect ratio is high, the present component tends to more readily exhibit effects such as suppression of thermal linear expansion and thermal deformation.

Examples of the inorganic filler include calcium carbonate, talc, kaolin clay, silica, magnesium hydroxide, calcium hydroxide, aluminum hydroxide, zeolite, mica, alumina, barium sulfate, and glass fiber. Among them, glass fiber is preferred due to its high aspect ratio and low dielectric loss.

When a filler is used in the present component, the content of the filler in the present component is preferably 10 to 70% by mass, more preferably 20 to 60% by mass, and still more preferably 25 to 50% by mass per 100% by mass of the present component.

When the content of the filler is in the above-described range, the present component excellent in mechanical strength and heat resistance can be easily obtained, and the difference in the coefficient of linear expansion between the present component and other components in contact therewith (e.g., metal) can also be reduced.

[Weathering Stabilizer]

Since the polymer (A) has room for improvement in terms of weather resistance, when the present component is used, for example, in outdoor applications, an embodiment of the present component preferably includes a weather stabilizer from the standpoint of improving weather resistance, for example.

When a weathering stabilizer is used in the present component, the weathering stabilizer may be used alone or two or more thereof.

Examples of the weathering stabilizer include, but are not particularly limited to, heterocyclic hindered amine compounds (e.g., compounds described in JPH3-28249A), benzotriazole compounds (e.g., compounds described in JPH3-28249A and JPH3-28248A), benzophenone compounds (e.g., compounds described in JPH3-28248A), salicylate ester compounds (e.g., compounds described in JPS58-22162A), and piperidine compounds (e.g., compounds described in JPS58-22162A).

When a weathering stabilizer is used in the present component, the content of the weathering stabilizer in the present component is preferably 0.001 to 10% by mass, more preferably 0.01 to 5% by mass, and still more preferably 0.01 to 1% by mass per 100% by mass of the present component.

When the content of the weather stabilizer is in the above-described range, the present component excellent in weather resistance while maintaining the physical properties of the polymer (A) can be easily obtained.

[Antioxidant]

Depending on its intended application, the present component may contain an antioxidant from the standpoint of suppressing oxidation of the present component and facilitating the attainment of desired properties over an extended period, for example. An embodiment of the present component preferably includes an antioxidant.

When an antioxidant is used in the present component, the antioxidant may be used alone or two or more thereof.

Examples of the antioxidant include, but are not particularly limited to, phenolic antioxidants (e.g., 2,6-di-tert-butyl-4-methylphenol), polycyclic phenolic antioxidants (e.g., 2,2'-methylenebis(4-methyl-6-tert-butylphenol)), phosphorus-based antioxidants (e.g., tetrakis(2,4-di-tert-butylphenyl)-4,4-biphenylenediphosphonate), sulfur-based antioxidants (e.g., dilauryl thiodipropionate), amine-based antioxidants (e.g., N,N-diisopropyl-p-phenylenediamine), and lactone-based antioxidants.

When an antioxidant is used in the present component, the content of the antioxidant in the present component is preferably 0.001 to 10% by mass, more preferably 0.01 to 5% by mass, and still more preferably 0.01 to 1% by mass per 100% by mass of the present component.

When the content of the antioxidant is in the above-described range, the present component exhibiting the desired properties over an extended period can be easily obtained.

[Flame retardant]

The flame retardant is not particularly limited, and conventionally known flame retardants may be used. Specific examples thereof include organic flame retardants (e.g., nitrogen-containing, sulfur-containing, silicon-containing, and phosphorus-containing flame retardants) and inorganic flame retardants (e.g., antimony trioxide, zinc borate, and red phosphorus).

When a flame retardant is used in the present component, the content of the flame retardant in the present component is preferably 0.001 to 10% by mass, more preferably 0.01 to 5% by mass, and still more preferably 0.01 to 1% by mass per 100% by mass of the present component.

<Production Method of Present Component>

The present component can be produced by forming it into a desired shape with, for example, the polymer (A) or the resin composition using a conventionally known method.

Examples of such known methods include extrusion molding, injection molding, inflation molding, blow molding, extrusion blow molding, injection blow molding, press molding, stamping molding, vacuum molding, calender molding, filament molding, foam molding, and powder slush molding. The present component may also be produced by firstly obtaining a primary molded article using a method such as extrusion molding, injection molding, or solution casting, and then further processing it using a method such as blow molding or stretching.

For example, when used as a case or protective member, the present component may be integrally molded with other members such as a coil. Alternatively, the present component having a desired shape may be produced with a 3D printer, for example. When used as a core material for a coil, the present component may also be produced by filling the coil with, for example, the polymer (A) or the resin composition.

<<Non-Contact Power Supply System, Immobile Body, Mobile Body, And Electric Product>>

A non-contact power supply system according to an embodiment of the present invention uses the present component. The non-contact power supply system typically includes a power supply body and a power receiving body, and the present component may be used in either the power supply body or the power receiving body, or in both.

Examples of the power supply body and the power receiving body include a mobile body, an immobile body, and an electric product.

Examples of the transmission method such as electric field coupling or magnetic field coupling include a non-contact power supply system in which the power supply body is formed on an immobile body such as the ground (e.g., roads including public roads and highways, parking lot floors, gardens, or parks) or a building structure (e.g., floors, walls, ceilings, desks, or shelves); and a mobile body, such as a vehicle (e.g., electric vehicle (EV), electric cart, or automated guided vehicle (AGV)), robot, flying object (e.g., airplane or drone), or ship, or an electric product such as a PC, smartphone, or home appliance is brought near, particularly placed on, the power supply body to wirelessly supply power from the power supply body to the power receiving body, for example, via electric field coupling or magnetic field coupling.

In transmission methods such as electromagnetic wave transmission, the immobile body may serve as the power supply body and the mobile body as the power receiving body, but the power receiving body may also be the mobile body or an immobile body such as a disaster area, remote island, mountainous region, seabed, or offshore structure, and the power supply body may be a mobile body such as a satellite.

The power supply body may have a conventionally known configuration as long as it includes a transmitting antenna for non-contact power supply, and the power receiving body may also have a conventionally known configuration as long as it includes a receiving antenna for non-contact power supply.

Examples of the transmitting antenna for non-contact power supply include, in the case of electric field coupling, a device including a power source such as an AC power supply and electrodes forming a capacitor; in the case of magnetic field coupling, a device including a power source such as an AC or high-frequency power supply and a coil; and in the case of electromagnetic wave transmission, a device including a power source such as a solar power generator and an electromagnetic wave generator such as a microwave or laser.

Examples of the receiving antenna for non-contact power supply include, in the case of electric field coupling, a device including electrodes forming a capacitor; in the case of magnetic field coupling, a device including a coil; and in the case of electromagnetic wave transmission, a device including a receiver for electromagnetic waves such as microwaves or lasers.

Although the present component can be used without limitation for components in which resin components have been used among the components constituting the receiving and transmitting antennas, from the standpoint of more effectively exhibiting the effects of the present invention, the present component is preferably used as an electrode member for non-contact power supply based on electric field coupling, as a case for non-contact power supply based on magnetic field coupling, or as a protective member for non-contact power supply using any of the above transmission methods.

Specific examples of the electrode member include a substrate that may be used for the electrode of the power supply body and/or the power receiving body and an insulating layer.

The use of the present component as a substrate or insulating layer can suppress leakage between the electrode and ground, reduce the thickness of the electrode, efficiently perform power transmission, and sufficiently support and secure metal layers such as wiring.

Specific examples of the case include a case that covers (encloses) the coil of the power supply body and/or the power receiving body.

The use of the present component as a case can suppress magnetic field (magnetic flux) leakage, thereby enabling efficient power transmission, and prevent ingress of, for example, water, thereby suppressing a decrease in transmission efficiency and preventing, for example, damage to the coil. Furthermore, the use of the present component as a case can provide the receiving and transmitting antennas with alkali resistance even when the antennas are in contact with alkaline substances such as asphalt or concrete, thereby enabling the desired properties to be maintained over an extended period.

Specific examples of the protective member include a protective member that covers the coil, a core material that protects the shape and spacing of the coil, a protective member that covers the entire receiving or transmitting antenna, and a (surface) protective layer for the electrode.

The use of the present component as a protective member enables efficient power transmission and also prevents ingress of, for example, water, thereby suppressing a decrease in transmission efficiency and preventing, for example, damage to the coil. Furthermore, the use of the present component as a protective member can suppress the adhesion of dirt, thereby reducing transmission loss caused by dirt.

[Examples]

An embodiment of the present invention will be described in detail based on Examples, but the present invention is not limited to these Examples.

[Example 1]

A 4-methyl-1-pentene polymer (product name: MX002O, manufactured by Mitsui Chemicals, Inc., density: 0.834 g/cm$^3$) (hereinafter, also referred to as "4M1P-1") was injection-molded at a cylinder temperature of 280°C and a mold temperature of 60°C of an injection-molding machine using a flat metal mold having a length of 100 mm, a width of 100 mm, and a thickness of 1 mm to prepare a test plate.

[Example 2]

A test plate was prepared in the same manner as in Example 1 except that a 4-methyl-1-pentene polymer (product name: RT18, manufactured by Mitsui Chemicals, Inc., density: 0.833 g/cm$^3$) (hereinafter, also referred to as "4M1P-2") was used instead of 4M1P-1.

[Example 3]

A test plate was prepared by adding 100 parts by mass of 4M1P-1 and 2 parts by mass of a chemical foaming agent Hydrocerol CF (manufactured by Clariant) as a foaming agent to an injection-molding machine, and the mixture was injection-molded at a cylinder temperature of 280°C and a mold temperature of 60°C of the injection-molding machine using a flat metal mold having a length of 100 mm, a width of 100 mm, and a thickness of 1 mm to prepare a test plate.

[Comparative Example 1]

A polycarbonate (PC) sheet (product name: Polyca-Ace, manufactured by Sumitomo Bakelite Co., Ltd.,) was cut into a size of 100 mm in length, 100 mm in width, and 1 mm in thickness to prepare a test plate.

[Comparative Example 2]

Polyethylene terephthalate (PET) (product name: J005PC, manufactured by Mitsui Chemicals, Inc.) was placed in a flat metal mold having a length of 100 mm, a width of 100 mm, and a thickness of 1 mm and was pressed at 290°C to prepare a test plate.

[Comparative Example 3]

Polystyrene (PS) (product name: GPPS HF77, manufactured by PS Japan Corporation) was placed in a flat metal mold having a length of 100 mm, a width of 100 mm, and a thickness of 1 mm and was pressed at 242°C to prepare a test plate.

[Comparative Example 4]

A polyphenylene sulfide (PPS) sheet (product name: Torelina, manufactured by Toray Industries, Inc.) was cut into a size of 100 mm in length, 100 mm in width, and 0.1 mm in thickness to prepare a test plate.

[Comparative Example 5]

Polyvinyl chloride (PVC) (product name: TK-700, manufactured by Shin-Etsu Chemical Co., Ltd.) was placed in a flat metal mold having a length of 100 mm, a width of 100 mm, and a thickness of 0.5 mm and was pressed at 140°C to prepare a test plate.

[Comparative Example 6]

ABS (product name: GR-2000, manufactured by Denka Company Limited.) was placed in a flat metal mold having a length of 100 mm, a width of 100 mm, and a thickness of 1 mm and was pressed at 260°C to prepare a test plate.

[Comparative Example 7]

An acrylic sheet (product name: SUMIPEX, manufactured by Sumitomo Chemical Co., Ltd.) was cut into a size of 100 mm in length, 100 mm in width, and 1 mm in thickness to prepare a test plate.

<Density>

The density of the test plates prepared in Examples and Comparative Examples was measured using water displacement method in accordance with JIS K 7112:1999. Only in Example 3, a 5-cm test plate was measured five times in total with an electronic gravimeter (manufactured by AS ONE Corporation) at 25°C, and the average of the three measurements obtained by excluding the minimum and maximum values was adopted to convert the specific gravity to density. The results are shown in Table 1.

<Melting Point (Tm)>

Exothermic and endothermic curves of the test plates prepared in Examples and Comparative Examples were obtained using a DSC measurement device (DSC220C) manufactured by Seiko Instruments Inc. to determine the temperature at the position of the maximum melting peak during temperature rise as the melting point (Tm) of the test plates. The measurement was made as follows.

About 5 mg of a sample was cut out from the test plate prepared in each of Examples and Comparative Examples, packed in an aluminum pan for measurement, raised from 20°C to 280°C at a heating rate of 10°C/min, and held at 280°C for 5 minutes. Thereafter, the temperature was decreased to 20°C at a cooling rate of 10°C/min, held at 20°C for 5 minutes, then raised from 20°C to 280°C again at a heating rate of 10°C/min, and decreased to 50°C again at a cooling rate of 50°C/min. The temperature at the position of the maximum melting peak developed during the second temperature rise was defined as the melting point (Tm). The results are shown in Table 1.

<Flexural Modulus>

Using the test plates prepared in Examples and Comparative Examples, ASTM-4 dumbbell-shaped test pieces were prepared in accordance with ASTM D790, and a flexural test was performed under conditions of a tensile speed of 1.3 mm/min, a span of 51 mm, and a measurement temperature of 23°C to measure the flexural modulus (MPa). The results are shown in Table 1.

<Alkali Resistance>

The test plate prepared in each of Examples and Comparative Examples was immersed in a 50% by mass aqueous sodium hydroxide solution for 3 months (90 days) at 60°C. Thereafter, the test plate was removed from the aqueous sodium hydroxide solution and washed with water. The surface of the test plate was visually checked after washing with water and was evaluated as S when the test plate was almost unchanged, A when the test plate was slightly bleached or slightly swollen, B when the test plate was bleached or the surface of the test plate was uneven, and C when the test plate was significantly bleached or the surface of the test plate was significantly uneven before and after immersion in the aqueous sodium hydroxide solution. The results are shown in Table 1.

[Table 1]

| | Example | | | Comparative Example | | | | | | |
|---|---|---|---|---|---|---|---|---|---|---|
| | 1 | 2 | 3 | 1 | 2 | 3 | 4 | 5 | 6 | 7 |
| Resin type | 4M1P-1 | 4M1P-2 | 4M1P-1 | PC | PET | PS | PPS | PVC | ABS | Acrylic |
| Density (g/cm$^3$) | 0.83 | 0.83 | 0.55 | 1.2 | 1.3 | 1.04 | 1.35 | 1.4 | 1.2 | 1.2 |
| Melting point (°C) | 224 | 232 | 224 | 250 | 260 | 212 | 275 | 110 | 230 | 105 |
| Flexural modulus (MPa) | 540 | 1530 | - | 3000 | 3070 | 30 | 3900 | 1130 | 2500 | 3430 |
| Alkali resistance | S | S | S | C | S | S | B | S | A | B |

<Relative Permittivity and Dielectric Loss Tangent>

Using the test plates prepared in Examples and Comparative Examples, the relative permittivity ($\varepsilon r$) and the dielectric loss tangent (tan $\delta$) at the following frequencies were measured at 23°C. Table 2 shows the results.

At 1 MHz, 5 MHz, 10 MHz and 15 MHz, measurements were made under room temperature conditions using a cavity resonator perturbation method in accordance with IEC62810.

At 1 GHz, 10 GHz, and 25 GHz, measurements were made under room temperature conditions using a cylindrical cavity resonance method in accordance with JIS R 1641:2007.

[Table 2]

| | | Example | | | Comparative Example | | | | | | |
|---|---|---|---|---|---|---|---|---|---|---|---|
| | | 1 | 2 | 3 | 1 | 2 | 3 | 4 | 5 | 6 | 7 |
| Relative permittivity ($\varepsilon$ r) | 1 MHz | 2.1 | 2.1 | 1.7 | 2.8 | 3.1 | 2.6 | 2.9 | 2.8 | 2.7 | 2.6 |
| | 5 MHz | 2.1 | 2.1 | - | 2.8 | 3.1 | 2.6 | 2.9 | 2.7 | 2.7 | 2.6 |
| | 10 MHz | 2.1 | 2.1 | - | 2.8 | 3.0 | 2.6 | 2.9 | 2.7 | 2.6 | 2.5 |
| | 15 MHz | 2.1 | 2.1 | - | 2.8 | 3.0 | 2.6 | 2.9 | 2.7 | 2.6 | 2.5 |
| | 2.45 GHz | 1.8 | 2.1 | - | 2.6 | 2.8 | 2.5 | 2.9 | 2.5 | 2.5 | 2.6 |
| | 10 GHz | 2.1 | 2.1 | 1.8 | 2.8 | 3.0 | 2.6 | 3.4 | 2.8 | 2.7 | 2.7 |
| | 24 GHz | 2.1 | 2.1 | - | 2.8 | 3.0 | 2.5 | 3.2 | 2.6 | 2.6 | - |
| Dielectric loss tangent (tan $\delta$) | 1 MHz | 0.00013 | 0.00013 | 0.00021 | 0.010 | 0.026 | 0.016 | 0.001 | 0.016 | 0.010 | 0.021 |
| | 5 MHz | 0.00004 | 0.00004 | - | 0.013 | 0.023 | 0.015 | 0.001 | 0.014 | 0.010 | 0.016 |
| | 2.45 GHz | 0.00028 | - | - | 0.005 | 0.008 | 0.008 | 0.002 | 0.006 | 0.005 | 0.006 |
| | 10 GHz | 0.00031 | 0.00059 | 0.0003 | 0.006 | 0.009 | 0.006 | 0.003 | 0.006 | 0.005 | 0.015 |
| | 24 GHz | 0.00027 | 0.00054 | - | 0.015 | 0.012 | 0.006 | 0.003 | 0.007 | 0.006 | - |

**Claims**

1. A non-contact power supply component, comprising a 4-methyl-1-pentene (co)polymer (A).

2. The non-contact power supply component according to claim 1, further comprising a thermoplastic resin (B) other than the (co)polymer (A).

3. The non-contact power supply component according to claim 2, wherein the thermoplastic resin (B) comprises an olefin polymer (B-1).

4. The non-contact power supply component according to claim 3, wherein the thermoplastic resin (B) comprises 0 to 50% by mass of a thermoplastic resin (B-2) other than the olefin polymer (B-1).

5. The non-contact power supply component according to claim 4, wherein the thermoplastic resin (B-2) is an aliphatic polyamide.

6. The non-contact power supply component according to claim 1, further comprising at least one additive selected from a filler, a weathering stabilizer, an antioxidant, and a flame retardant.

7. The non-contact power supply component according to claim 1, wherein the (co)polymer (A) has a density of 0.85 g/cm$^3$ or less.

8. The non-contact power supply component according to claim 1, which has a dielectric loss tangent of 0.0025 or less at a frequency band of 1 MHz to 24 GHz.

9. The non-contact power supply component according to claim 1, which has a relative permittivity of less than 2.5 at a frequency band of 1 MHz to 24 GHz.

10. The non-contact power supply component according to any one of claims 1 to 9, wherein the non-contact power supply component is an electrode member for non-contact power supply based on electric field coupling.

11. The non-contact power supply component according to any one of claims 1 to 9, wherein the non-contact power supply component is a case for non-contact power supply based on magnetic field coupling.

12. The non-contact power supply component according to any one of claims 1 to 9, wherein the non-contact power supply component is a protective member for non-contact power supply.

13. A non-contact power supply system using the non-contact power supply component according to any one of claims 1 to 9.

14. An immobile body comprising the non-contact power supply component according to any one of claims 1 to 9.

15. A mobile body comprising the non-contact power supply component according to any one of claims 1 to 9.

16. An electric product comprising the non-contact power supply component according to any one of claims 1 to 9.

## INTERNATIONAL SEARCH REPORT

| International application No. |
| --- |
| **PCT/JP2024/012703** |

| A. | CLASSIFICATION OF SUBJECT MATTER |
| --- | --- |

*H02J 50/20*(2016.01)i
FI: H02J50/20

According to International Patent Classification (IPC) or to both national classification and IPC

| B. | FIELDS SEARCHED |
| --- | --- |

Minimum documentation searched (classification system followed by classification symbols)

H02J50/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2013-126008 A (SEKISUI CHEMICAL CO., LTD.) 24 June 2013 (2013-06-24) paragraphs [0008]-[0027], [0053], fig. 1, 2 | 1-3, 6, 12-16 |
| A | | 4-5, 7-11 |
| A | JP 2021-177698 A (VIEW, INC.) 11 November 2021 (2021-11-11) entire text, all drawings | 1-16 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 June 2024** | **18 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/012703**

| Patent document cited in search report | | | Publication date (day/month/year) | Patent family member(s) | | | Publication date (day/month/year) |
|---|---|---|---|---|---|---|---|
| JP | 2013-126008 | A | 24 June 2013 | (Family: none) | | | |
| JP | 2021-177698 | A | 11 November 2021 | US | 2018/0090992 | A1 | |
| | | | | entire text, all drawings | | | |
| | | | | US | 2019/0219881 | A1 | |
| | | | | US | 2019/0267840 | A1 | |
| | | | | US | 2020/0259237 | A1 | |
| | | | | US | 2021/0040789 | A1 | |
| | | | | US | 2021/0191218 | A1 | |
| | | | | US | 2021/0376445 | A1 | |
| | | | | US | 2021/0384764 | A1 | |
| | | | | US | 2022/0019117 | A1 | |
| | | | | US | 2022/0021099 | A1 | |
| | | | | US | 2022/0252952 | A1 | |
| | | | | US | 2022/0255351 | A1 | |
| | | | | US | 2023/0040424 | A1 | |
| | | | | US | 2023/0074720 | A1 | |
| | | | | US | 2023/0393443 | A1 | |
| | | | | WO | 2017/192881 | A1 | |
| | | | | WO | 2018/039080 | A1 | |
| | | | | WO | 2018/063919 | A1 | |
| | | | | WO | 2022/098630 | A1 | |
| | | | | KR | 10-2019-0005197 | A | |
| | | | | KR | 10-2022-0025291 | A | |
| | | | | KR | 10-2023-0104994 | A | |
| | | | | CN | 109314307 | A | |
| | | | | CN | 113934066 | A | |
| | | | | CN | 109791338 | A | |
| | | | | CN | 109844631 | A | |
| | | | | CN | 115185133 | A | |
| | | | | CN | 116569115 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022060100 A
- WO 0153369 A
- WO 0127124 A
- WO 06025540 A
- JP H03193796 A
- JP H0241303 A
- JP H328249 A
- JP H328248 A
- JP S5822162 A